# FASCICULE DE BREVET EUROPEEN

(11) **EP 1 420 673 B1**
(45) Date de publication et mention de la délivrance du brevet: **29.11.2006**
(21) Numéro de dépôt: 02796327.1
(22) Date de dépôt: 30.08.2002
(51) Int. Cl.: A47J 36/38

(54) **APPAREIL DE CUISSON D'ALIMENTS, NOTAMMENT FRITEUSE, COMPORTANT UN CATALYSEUR ET DES MOYENS DE REGULATION DUDIT CATALYSEUR**
GERÄT ZUR ZUBEREITUNG VON NAHRUNGSMITTELN, INSBESONDERE FRITEUSE, MIT EINEM KATALYSATOR UND MITTELN ZUR EINSTELLUNG DES KATALYSATORS
APPLIANCE FOR COOKING FOOD, IN PARTICULAR FRYER, COMPRISING A CATALYST AND MEANS FOR REGULATING SAID CATALYST

(30) Priorité: 31.08.2001 FR 0111471
(43) Date de publication de la demande: 26.05.2004
(73) Titulaire: SEB S.A., 69132 Ecully Cedex (FR)
(72) Inventeur: PAYEN, Jean-Marc, F-21800 Quétigny (FR)
(74) Mandataire: Martin, Didier Roland Valéry
(86) Numéro de dépôt international: PCT/FR2002/002966
(87) Numéro de publication internationale: WO 2003/017813

(56) Documents cités:
- FR-A- 2 724 834
- US-A- 2 815 427
- US-A- 5 756 053
- US-A- 5 924 414

## Description

### DOMAINE TECHNIQUE

La présente invention se rapporte au domaine technique général des appareils de cuisson d'aliments, du genre friteuses, équipés d'un moyen de traitement des odeurs de cuisson comprenant un sous-ensemble catalyseur à travers lequel passent le flux ou les vapeurs de cuisson avant leur rejet vers l'extérieur de l'appareil.

La présente invention concerne un appareil de cuisson d'aliments en atmosphère fermée, du genre friteuse par exemple, comprenant une cuve et un couvercle, des moyens de chauffe de l'appareil, qu'ils soient internes ou externes à l'appareil, pour réaliser la cuisson proprement dite, et un catalyseur pour assurer le traitement des odeurs du flux ou des vapeurs de cuisson avant le rejet dudit flux de cuisson vers l'extérieur de l'appareil.

### TECHNIQUE ANTERIEURE

Lors de la réalisation de cuisson d'aliments, qu'il s'agisse de cuisson à la vapeur dans des cuiseurs à riz par exemple, ou de cuisson dans de l'huile dans le cas de friteuses, on constate l'émission de vapeurs ou flux de cuisson plus ou moins prononcée suivant le mode de cuisson et le fluide de cuisson utilisés, cette émission de vapeur présentant une odeur caractéristique généralement peu appréciée de l'utilisateur et que l'on souhaite précisément éviter ou traiter.

L'un des premiers moyens de traitement connus consiste bien évidemment à réaliser la cuisson des aliments en atmosphère fermée en réalisant une jonction suffisamment étanche entre la cuve et le couvercle de l'appareil.

Néanmoins, pour des raisons évidentes de sécurité, en particulier dans les autocuiseurs ou dans des friteuses, il est toujours nécessaire de réaliser une fuite du flux de cuisson, et c'est la raison pour laquelle on équipe de tels appareils de moyens de traitement des odeurs de cuisson pour débarrasser le flux de cuisson de tout ou partie des molécules volatiles responsables de l'odeur de cuisson.

Différents dispositifs ont été envisagés, et on connaît notamment l'utilisation de filtres à charbon actif permettant de retenir tout ou partie des matières grasses, tel que cela est par exemple décrit dans le brevet FR-1 568 985 ou dans le brevet EP-150 516 par exemple.

Néanmoins, pour être efficaces, les filtres à charbon actif doivent être fréquemment changés dans l'appareil de cuisson, ce qui constitue une contrainte supplémentaire de conception de l'appareil, dans la mesure où il faut impérativement prévoir de concevoir un système de montage et de démontage du filtre à charbon actif. Par ailleurs, on constate que l'utilisateur oublie fréquemment de changer le filtre à charbon actif, une telle opération étant par ailleurs perçue comme une contrainte. Tous ces éléments concourent à rendre l'utilisation de filtres à charbon actif peu efficace pour le traitement d'odeurs de cuisson. En outre, ils ne sont pas d'une efficacité absolue et universelle tout en laissant visible le flux traité puis rejeté et hors de l'appareil.

On connaît également un système de traitement des odeurs de friteuses qui consiste à condenser les vapeurs de cuisson dans un système à condensation monté dans l'appareil. Un tel système ne présente pas les inconvénients du changement de tout ou partie du système comme l'exigent les filtres à charbon actif, mais nécessite de la part de l'utilisateur une manipulation relativement fastidieuse à chaque opération de cuisson. En effet, le système à condensation doit être maintenu à très basse température, par exemple dans un congélateur, pendant toutes les périodes de non utilisation pour être monté dans l'appareil de cuisson lui-même avant toute opération de cuisson, d'autant que ce système nécessite une vidange du bac après cuisson. Le rechargement au froid ne permet pas de faire une deuxième cuisson avant 24 h avec le même système. Ce montage systématique peut être perçu comme une contrainte supplémentaire par l'utilisateur. Par ailleurs, il s'avère que les systèmes à condensation sont généralement d'un volume important, ce qui constitue une contrainte supplémentaire de conception, dans la mesure où il faut intégrer ce système dans l'appareil de cuisson dont il convient généralement de limiter la taille.

Enfin, il est déjà connu d'avoir recours à des catalyseurs, comme décrit dans US 5 924 414, montés notamment dans des friteuses, pour assurer le traitement des odeurs de cuisson. L'utilisation de catalyseurs évite toute manipulation spécifique en comparaison avec les systèmes incluant des filtres à charbon actif ou des systèmes à condensation, puisque le catalyseur est installé à demeure dans l'appareil et forme donc une unité de traitement permanente des odeurs.

En revanche, il s'avère que l'utilisation d'un catalyseur dans des appareils de cuisson d'aliments, et notamment dans des friteuses, est délicate à mettre en oeuvre dans la mesure où les températures atteintes peuvent être élevées et présenter un danger pour l'intégrité de l'appareil et l'utilisateur. Par ailleurs, l'atteinte de températures suffisamment élevées est nécessaire pour obtenir un bon rendement et un bon traitement des odeurs de cuisson, et rendre invisibles les vapeurs de cuisson traitées et rejetées. En même temps, on ne peut privilégier, pour des raisons de sécurité, des températures de fonctionnement du catalyseur trop basses, car le rendement du catalyseur est alors trop faible et on constate alors l'apparition d'odeurs de cuisson résiduelles.

On comprend dès lors que l'intégration de catalyseurs dans des appareils de cuisson d'aliments, et notamment dans des friteuses, est une opération délicate à réaliser, et que l'on recherche précisément à concevoir des appareils de cuisson d'aliments pourvus de catalyseurs mais étant capables de fonctionner dans des conditions optimales.

### EXPOSE DE L'INVENTION

L'objet assigné à l'invention vise en conséquence à porter remède aux différents inconvénients de l'art antérieur mentionnés précédemment, et à proposer un nouvel appareil de cuisson d'aliments en atmosphère fermée équipé d'un catalyseur pour le traitement des odeurs de cuisson, qui soit à même de fonctionner de manière optimale à l'aide de moyens simples, sûrs et efficaces.

Un autre objet de l'invention vise à proposer un nouvel appareil de cuisson dont le catalyseur est régulé en fonctionnement à l'aide de moyens simples et fiables.

Un autre objet de l'invention vise à proposer un nouvel appareil de cuisson dont le coût de fabrication est particulièrement maîtrisé.

Un autre objet de l'invention vise à proposer un nouvel appareil de cuisson dont le rendement du catalyseur est particulièrement élevé et obtenu à l'aide de moyens simples et bon marché.

Un autre objet de l'invention vise à proposer un nouvel appareil de cuisson d'aliments dans lequel le rendement du catalyseur est particulièrement élevé et dans lequel le rejet de vapeur est invisible.

Un objet complémentaire de l'invention vise à proposer un nouvel appareil de cuisson dont la sécurité d'utilisation est renforcée.

Les objets assignés à l'invention sont atteints à l'aide d'un appareil de cuisson d'aliments en atmosphère fermée comprenant une cuve et un couvercle, des moyens de chauffe de l'appareil internes ou externes pour réaliser la cuisson et un catalyseur pour assurer le traitement des odeurs du flux de cuisson avant le rejet du flux de cuisson vers l'extérieur, caractérisé en ce que :
- le catalyseur comporte au moins un élément de chauffe,
- l'appareil comporte des moyens de régulation de la température desdits éléments de chauffe, lesdits moyens étant agencés pour capter la température de la zone de cuisson.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue générale en perspective, un appareil de cuisson d'aliments conforme à l'invention, en l'occurrence une friteuse.
- La figure 2 illustre, selon une vue en perspective partielle, un détail de réalisation de la partie interne d'une friteuse conforme à l'invention.
- La figure 3 illustre, selon une vue en coupe transversale partielle, un détail de réalisation et de montage d'un catalyseur conforme à l'invention dans le couvercle amovible d'une friteuse.

### MEILLEURE MANIERE DE REALISER L'INVENTION

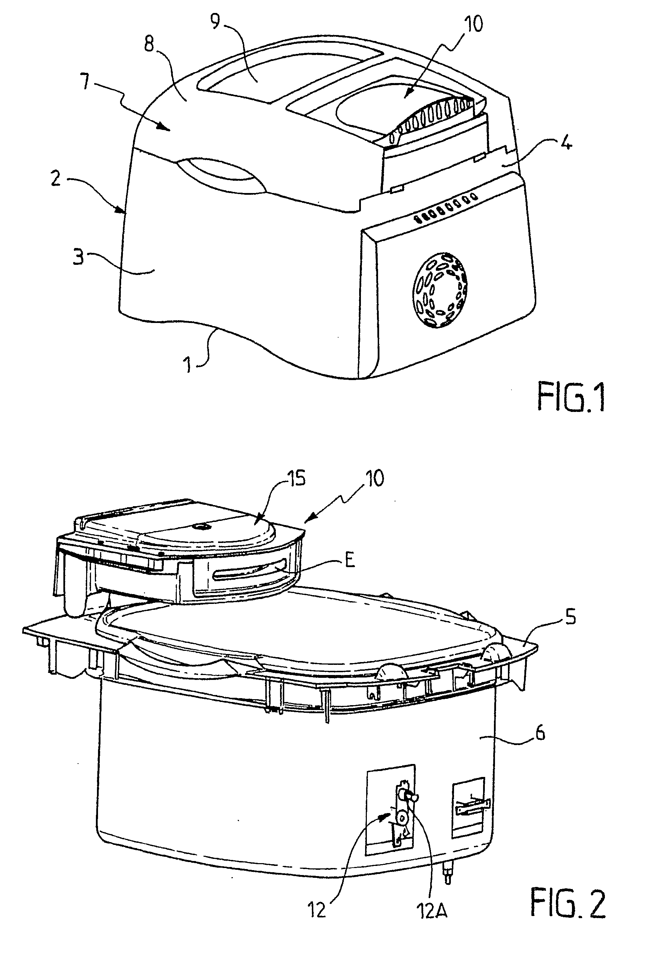

Dans les exemples de réalisation illustrés aux figures 1 à 3, l'appareil de cuisson d'aliments conforme à l'invention et décrit est constitué par une friteuse destinée à et conçue pour la réalisation de fritures d'aliments de toutes sortes dans de la matière grasse, telle qu'un bain d'huile par exemple. Au sens de l'invention, il conviendra néanmoins d'entendre que le terme appareil de cuisson d'aliments recouvre l'ensemble des appareils de cuisson d'aliments domestiques susceptibles d'assurer la cuisson d'aliments, l'application à des appareils de friture du genre friteuse n'étant qu'une application préférentielle, l'invention pouvant bien évidemment également s'appliquer à d'autres applications telles que des cuiseurs à riz ou des cuiseurs polyvalents, dès l'instant où ces appareils de cuisson mettent en oeuvre une cuisson dans un fluide de cuisson contenu dans une enceinte fermée sensiblement étanche.

L'appareil de cuisson d'aliments illustré aux figures 1 à 3, en l'occurrence une friteuse électrique, comporte une embase 1 destinée à former le socle de l'appareil et destinée à reposer sur un plan ou un support. L'embase 1 est généralement solidaire d'une jupe externe 2 ou rapportée sur cette dernière, qui est réalisée par exemple en matériau métallique ou en matériau plastique résistant à la chaleur et formant l'enveloppe externe de la friteuse. La jupe externe 2 est néanmoins de manière classique réalisée en un matériau plastique bon marché et peu résistant à la chaleur tel que du polypropylène, ne résistant pas à l'énergie thermique dissipée en continu par le ou les éléments chauffant à haute température classiquement utilisés dans les friteuses électriques, et généralement disposés au fond proche de l'embase 1.

Les moyens de chauffe de l'appareil (non représentés aux figures) peuvent être internes à l'appareil et classiquement composés d'éléments blindés ou d'éléments équivalents, reliés également de manière classique à un bloc de connexion électrique (non représenté) et à un câblage électrique permettant de raccorder l'appareil au réseau. De manière également connue de l'homme du métier, l'appareil de cuisson conforme à l'invention sera pourvu de l'ensemble des moyens de sécurité électriques et électroniques tel que capteurs de température, fusibles, etc., requis pour la conception de ces appareils. Ces éléments étant bien connus de l'homme du métier, ils ne seront en conséquence pas décrits plus en détails dans la suite de la description. Les moyens de chauffe peuvent être aussi externes à l'appareil et séparés ou séparables de ce dernier.

La jupe externe 2 pourra présenter toute forme géométrique appropriée et esthétique, par exemple circulaire, ovale ou rectangulaire, de manière à définir par exemple des faces latérales 3 et des faces avant et arrière 4.

La partie supérieure de la jupe externe 2 sera avantageusement pourvue d'une bague annulaire assurant la liaison mécanique entre la partie supérieure de la jupe externe 2 et une cuve de cuisson 6, généralement métallique, destinée à recevoir l'huile de friture et les aliments à frire. Avantageusement, et tel que cela est bien connu de l'homme du métier et par exemple du brevet FR-87 06728, la bague annulaire sera avantageusement réalisée en un matériau thermiquement isolant et résistant en continu aux températures d'utilisation de la friteuse, et par exemple en polyamide, polyester, PBTP ou similaire, et supportera au moins en partie la cuve de cuisson 6.

Au sens de l'invention, l'embase 1, la jupe externe 2 ainsi que la bague annulaire formeront de manière générale le corps principal de l'appareil de cuisson d'aliments conforme à l'invention.

Selon l'invention, la friteuse comportera un couvercle 7 monté de manière amovible, articulé relativement au corps principal de la friteuse et destiné à fermer, de manière sensiblement étanche, par exemple par l'intermédiaire de joints d'étanchéité (non montrés aux figures), ledit corps principal pendant la cuisson.

Avantageusement, et tel que montré aux figures 1 et 2 notamment, le couvercle 7 pourra être pourvu sur sa face supérieure 8 d'un hublot 9 permettant de surveiller l'évolution de la cuisson ou de la friture pendant le cycle de cuisson, et lorsque le couvercle est fermé sur le corps principal.

La cuisson d'aliments en milieu fermé dans un fluide de cuisson, qu'il s'agisse de cuisson à la vapeur ou de friture, génère la production d'odeurs caractéristiques et souvent désagréables résultant des réactions chimiques liées à la cuisson proprement dite, et en particulier à l'émission de substances organiques volatiles.

L'appareil de cuisson d'aliments en atmosphère fermée comprend donc une cuve 6, un couvercle 8 et des moyens de chauffe de l'appareil internes ou externes pour réaliser la cuisson. Il comporte en outre un système de traitement thermique des odeurs de cuisson, à savoir un catalyseur 10, pour assurer le traitement des odeurs du flux de cuisson avant leur rejet vers l'extérieur de l'appareil.

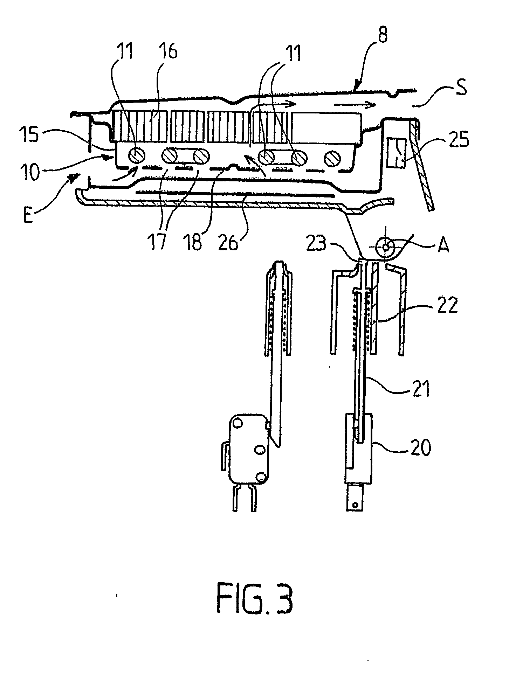

Selon l'invention, et tel qu'illustré par exemple à la figure 3, le catalyseur 10 comporte au moins un élément de chauffe 11, l'appareil comportant en outre des moyens de régulation de la température 12 desdits éléments de chauffe 11, lesdits moyens 12 étant agencés pour capter la température de la zone de cuisson.

Grâce à ce montage, il est donc possible de réguler la température des éléments de chauffe 12 du catalyseur 10 par une image thermique qui n'est pas située dans le catalyseur lui-même mais qui correspond à une image représentative de celle régnant dans le fluide de cuisson.

Selon l'invention, les moyens de régulation de la température 12 comprennent un capteur de température 12A monté de manière à capter la température de la cuve de cuisson 6 en tant qu'image de la température de cuisson.

Avantageusement, tel qu'illustré à la figure 2, le capteur de température 12A est monté contre ou sur la paroi extérieure de la cuve 6. Le capteur de température 12A peut également être monté contre ou sur la paroi intérieure de la cuve 6 et être alors dans le bain même de cuisson. Il est donc contre ou sur la paroi latérale de la cuve 6.

Le capteur de température 12A peut être, de manière bien connue de l'homme du métier, un thermostat (figure 2), un bilame ou tout autre moyen équivalent tel qu'un bulbe ou un alliage à mémoire de forme (AMF) par exemple.

Avantageusement, tel qu'illustré à la figure 2, le capteur de température 12A sera monté sur la cuve 6 à une hauteur correspondant à la hauteur du bain d'huile, et par exemple à mi-hauteur de la hauteur maximale autorisée pour le bain d'huile. A titre de variante, le capteur de température 12A pourrait être également monté contre ou sur le fond de la cuve 6.

Tel que cela est bien connu de l'homme du métier, l'appareil conforme à l'invention comporte également un système de régulation thermique (non représenté) des moyens de chauffe, incluant par exemple un thermostat, ledit système étant destiné à assurer la régulation thermique de l'appareil et du bain d'huile en fonction de la température de consigne affichée par l'utilisateur.

Selon une version particulièrement avantageuse de l'invention, le système de régulation thermique des moyens de chauffe de l'appareil est associé au moyen de régulation thermique 12 de la température du catalyseur 10, ledit système de régulation comportant un capteur de température commun avec le moyen de régulation thermique 12. Selon cette variante, le capteur de température 12A servant à assurer la régulation thermique des éléments de chauffe 11 du catalyseur, sert donc également à assurer la régulation thermique des moyens de chauffe de la friteuse. La régulation thermique du catalyseur 10 est donc effectuée par un seul et unique élément, à savoir le thermostat (ou un organe équivalent) de la friteuse. Le montage électrique correspondant implique donc un montage en parallèle des résistances de la friteuse et des éléments de chauffe 11.

A titre de variante, il est bien évidemment possible de réaliser un montage selon lequel le système de régulation thermique des moyens de chauffe de la friteuse est séparé des moyens de régulation thermique 12 de la température du catalyseur 10, ledit système et lesdits moyens comportant chacun un capteur de température distinct. Selon cette dernière variante, les températures de consigne étant différentes pour chacun des deux thermostats, l'efficacité du catalyseur peut être accrue.

Selon une version particulièrement intéressante de l'invention, le catalyseur 10 est formé par un boîtier 15 qui est monté et intégré dans le couvercle 8 de l'appareil.

Le boîtier 15 contient une cellule catalytique 16 formant la partie supérieure du boîtier 15 et s'étendant au voisinage de la face externe du couvercle 8. Le boîtier 15 contient également les éléments de chauffe 11 qui s'étendent au voisinage et sous la cellule catalytique 16 pour la chauffer par rayonnement, sans apparition de points chauds. Le boîtier 15 est pourvu d'orifices d'admission 17 du flux de cuisson à traiter, lesdits orifices 17 étant par exemple ménagés à travers une plaque inférieure 18 en inox dudit boîtier 15 située sensiblement au droit de la cuve de cuisson, les éléments de chauffe 11 étant interposés entre les orifices 17 et la cellule catalytique 16, et disposés sensiblement au droit desdits orifices 17.

Grâce à cette disposition, on obtient réchauffement homogène et efficace du flux de cuisson à traiter ce qui assure un bon fonctionnement et une bonne efficacité du catalyseur.

Avantageusement, les éléments de chauffe 11 sont formés par une résistance électrique en serpentin ou en hélice par exemple. En outre, il est particulièrement avantageux que la résistance en serpentin ou en hélice s'étende sensiblement sur toute la surface de la cellule catalytique 16 de manière à obtenir, grâce au serpentin, une concentration supérieure de la résistance électrique 11 à la périphérie de la cellule catalytique 16. Cet agencement diminue fortement l'apparition de points chauds au niveau de la cellule catalytique, notamment vers sa partie centrale dépourvue de zones de changement de direction correspondant aux branches des serpentins.

Avantageusement, et pour obtenir une excellente efficacité dans le traitement des odeurs, les éléments de chauffe 11 auront une charge thermique maximale au plus égale à 3 w/cm², et de préférence inférieure ou égale à 2,5 w/cm². Ceci permet d'obtenir une température maximum de l'ordre de 600°C en traitement, ce qui évite une surchauffe et permet de maintenir une homogénéité dans le traitement des vapeurs.

Tel qu'illustré notamment à la figure 3, le boîtier 15 est avantageusement monté dans le couvercle 8 de l'appareil, ce dernier étant monté sur une articulation A de manière à pouvoir pivoter entre une position de fermeture (figure 3) et une position d'ouverture (non représentée) dans laquelle le couvercle 8 est sensiblement vertical.

Selon une particularité avantageuse de l'invention, les éléments de chauffe 11 sont reliés à un circuit électrique comportant un interrupteur 20, tel qu'un micro-contact associé à la position du couvercle 8, de telle manière que l'interrupteur 20 coupe l'alimentation électrique des éléments de chauffe 11 dès que le couvercle est ouvert ou retiré.

Tel qu'illustré à la figure 3, l'interrupteur 20 est actionné par une tige 21 montée à coulissement élastique longitudinal libre dans un manchon 22, de manière à affleurer en position de repos à l'extérieur dudit manchon 22 par son extrémité 23. Dans cette position de repos libre, correspondant à la position ouverte du couvercle 8, l'interrupteur 20 ouvre le circuit électrique des éléments de chauffe 1. En revanche, lors de la fermeture du couvercle 8, l'extrémité 23 de la tige 21 est engagée par le couvercle lorsqu'il atteint sa position de fermeture sensiblement étanche, de telle façon que le circuit électrique des éléments de chauffe 11 est fermé. Cet agencement assure une bonne sécurité d'utilisation en permettant une coupure automatique du catalyseur dès l'ouverture du couvercle. Cet agencement permet aussi au catalyseur de ne pas fonctionner si l'utilisateur a besoin de cuire avec manipulation dans l'huile. Dans le cas de retrait du couvercle, les ressorts ramenant l'ensemble catalyseur à la verticale, celui-ci ne fonctionne pas, évitant tout risque de brûlure.

La sécurité d'utilisation de l'appareil peut être accrue en montant un thermostat de sécurité 25 dans l'appareil au voisinage du catalyseur 10. Ainsi, l'appareil selon l'invention peut comporter un thermostat d'ambiance et de sécurité 25, relié au circuit électrique d'alimentation des éléments de chauffe 11, ledit thermostat 25 étant disposé au voisinage du catalyseur 10, et par exemple dans une chambre (ouverte ou fermée) adjacente au catalyseur 10, pour détecter la température ambiante autour du catalyseur 10 et couper l'alimentation électrique des éléments de chauffe 11 en cas de dépassement de la température de consigne.

Le thermostat d'ambiance 25 est particulièrement utile pour éviter des problèmes de surchauffe des pièces plastiques en cas de ventilation momentanée insuffisante, le thermostat 25 coupant alors automatiquement les éléments de chauffe 11. Lors de cette coupure momentanée, les vapeurs de cuisson peuvent sortir sans être traitées, le catalyseur reprenant ensuite son fonctionnement normal dès que la température détectée par le thermostat de sécurité 25 est inférieure à la température de consigne.

Avantageusement, une contreplaque 26 peut être intégrée sous le boîtier 15 et à distance de ce dernier pour assurer un frein thermique et protéger la structure plastique du couvercle 8 en cas de surchauffe momentanée.

De manière classique, la cellule catalytique 16 pourra être réalisée en matériau du type cordirite, céramique ou Zircone Nullite avec des trous calibrés standards de 100 ou 400 CPSI ou de type mousse dans les supports 20 PPI par exemple, tel ceux de la Société SICAT.

La surface de la cellule catalytique 16 est calculée de manière à éviter des pertes de charge et de manière à avoir une vitesse de vapeur transitant acceptable. A titre d'exemple, la surface de base de la cellule catalytique 16 pourra être de 4 000 mm² pour une hauteur d'environ 30 mm au minimum avec des trous calibrés de 200 ou 400 CPSI. Selon une autre variante de réalisation, la cellule catalytique pourra être d'une surface de base de l'ordre de 8 000 mm² avec une hauteur réduite de 12 mm pour des trous calibrés de 200 ou 400 CPSI.

Lors de l'opération de cuisson, les vapeurs de cuisson sont dirigées vers l'entrée E du catalyseur 10 de manière à pénétrer dans les orifices 17 après s'être répartis dans un canal d'entrée situé sous et le long desdits orifices d'admission 17.

Le flux de cuisson est ensuite préchauffé ou chauffé en passant sur les éléments chauffants 11, puis est traité par catalyse en passant à travers et dans la cellule catalytique 16 avant de s'échapper et d'être rejeté à l'extérieur de la friteuse, de préférence vers l'arrière par la sortie S.

En plus du traitement des odeurs lors du passage dans les parties chaudes du catalyseur, il s'opère une pyrolyse des vapeurs d'huile contenues dans les vapeurs qui assure un traitement complet du flux de cuisson à sa sortie.

Le système de régulation selon l'invention permet en conséquence d'assurer un traitement particulièrement efficace des vapeurs et flux de cuisson grâce à l'utilisation d'un catalyseur, tout en mettant en oeuvre des moyens particulièrement simples et efficaces de régulation de température, et ce dans des conditions optimales de sécurité. Le rejet du flux traité est par ailleurs invisible.

### POSSIBILITE D'APPLICATION INDUSTRIELLE

L'invention trouve son application industrielle dans la conception et la fabrication d'appareils de cuisson d'aliments, et en particulier de friteuses.

## Revendications

1. Appareil de cuisson d'aliments en atmosphère fermée comprenant une cuve (6) et un couvercle (8), des moyens de chauffe de l'appareil internes ou externes pour réaliser la cuisson et un catalyseur (10) pour assurer le traitement des odeurs du flux de cuisson avant le rejet du flux de cuisson vers l'extérieur, **caractérisé en ce que** :
- le catalyseur (10) comporte au moins un élément de chauffe (11),
- l'appareil comporte des moyens de régulation de la température (12) desdits éléments de chauffe (11), lesdits moyens (12) étant agencés pour capter la température de la zone de cuisson.

2. Appareil selon la revendication 1 **caractérisé en ce que** les moyens de régulation (12) comprennent un capteur de température (12A) monté de manière à capter la température de la cuve (6) de cuisson en tant qu'image de la température de cuisson.

3. Appareil selon la revendication 2 **caractérisé en ce que** le capteur de température (12A) est monté contre ou sur la paroi extérieure de la cuve (6).

4. Appareil selon l'une des revendications 1 à 3 **caractérisé en ce qu'**il comporte un système de régulation thermique des moyens de chauffe.

5. Appareil selon la revendication 4 **caractérisé en ce que** le système de régulation thermique des moyens de chauffe est associé aux moyens de régulation thermique (12) de la température du catalyseur (10), ledit système comportant un capteur de température commun audits moyens de régulation thermique.

6. Appareil selon l'une des revendications 1 à 4 **caractérisé en ce que** le système de régulation thermique des moyens de chauffe est séparé des moyens de régulation thermique (12) de la température du catalyseur, ledit système et lesdits moyens comportant chacun un capteur de température distinct.

7. Appareil selon l'une des revendications 2 à 6 **caractérisé en ce que** le capteur de température de la cuve est un thermostat.

8. Appareil selon la revendication 7 **caractérisé en ce que** le thermostat est placé contre ou sur le fond de la cuve, ou contre et sur la paroi latérale de la cuve.

9. Appareil de cuisson selon l'une des revendications 1 à 8 **caractérisé en ce que** les éléments de chauffe du catalyseur ont une charge thermique maximale au plus égale à 3 w/cm², et de préférence inférieure ou égale à 2,5 w/cm².

10. Appareil selon l'une des revendications 1 à 9 **caractérisé en ce que** le catalyseur est formé par un boîtier (15) contenant une cellule catalytique (16) et des éléments de chauffe (11), ledit boîtier (15) étant pourvu d'orifices d'admission du flux de cuisson à traiter, les éléments de chauffe (11) étant interposés entre les orifices (17) et la cellule catalytique (16) et disposés sensiblement au droit desdits orifices (17).

11. Appareil selon la revendication 10 **caractérisé en ce que** les éléments de chauffe (11) sont formés par une résistance électrique en serpentins.

12. Appareil selon la revendication 11 **caractérisé en ce que** la résistance en serpentins (11) s'étend sensiblement sur toute la surface de la cellule catalytique (16).

13. Appareil selon l'une des revendications 10 à 12 **caractérisé en ce que** le boîtier (15) est monté dans le couvercle (8) de l'appareil.

14. Appareil selon l'une des revendications 1 à 13 **caractérisé en ce que** les éléments de chauffe (11) sont reliés à un circuit électrique comportant un interrupteur (20), tel qu'un micro-contact, associé à la position du couvercle (8) de telle manière que l'interrupteur (20) coupe l'alimentation électrique des éléments de chauffe (11) dès que le couvercle (8) est ouvert ou retiré.

15. Appareil selon l'une des revendications 1 à 14 **caractérisé en ce qu'**il comporte un thermostat de sécurité (25) relié au circuit électrique d'alimentation des éléments de chauffe (11), ledit thermostat étant disposé au voisinage du catalyseur pour détecter la température ambiante et couper l'alimentation électrique des éléments de chauffe (11) en cas de dépassement de la température de consigne.

16. Appareil selon l'une des revendications 1 à 14 **caractérisé en ce qu'**il est constitué par une friteuse.

## Claims

1. Appliance for cooking food in a closed atmosphere, comprising a vessel (6) and a lid (8), internal or external means of heating the appliance for effecting the cooking and a catalyser (10) for treating the odours from the cooking flux before the cooking flux is discharged towards the outside, **characterised in that**:
- the catalyser (10) comprises at least one heating element (11),
- the appliance comprises means of regulating the temperature (12) of the said heating element (11), the said means (12) being arranged so as to sense the temperature in the cooking zone.

2. Appliance according to claim 1, **characterised in that** the regulating means (12) comprise a temperature sensor (12a) mounted so as to sense the temperature in the vessel (6) as an image of the cooking temperature.

3. Appliance according to claim 2, **characterised in that** the temperature sensor (12a) is mounted against or on the external wall of the vessel (6).

4. Appliance according to one of claims 1 to 3, **characterised in that** it comprises a system for the thermal regulation of the heating means.

5. Appliance according to claim 4, **characterised in that** the thermal regulation for the heating means is associated with the thermal regulation (12) of the temperature of the catalyser (10), the said system comprising a temperature sensor common to the said thermal regulation means.

6. Appliance according to one of claims 1 to 4, **characterised in that** the thermal regulation system of the heating means is separated from the means (12) of thermal regulation of the temperature of the catalyser, the said system and the said means each comprising a distinct temperature sensor.

7. Appliance according to one of claims 2 to 6, **characterised in that** the vessel temperature sensor is a thermostat.

8. Appliance according to claim 7, **characterised in that** the thermostat is placed against or on the bottom of the vessel, or against the lateral wall of the vessel.

9. Cooking appliance according to one of claims 1 to 8, **characterised in that** the heating elements of the catalyser have a maximum thermal load of no more than 3 W/cm² and preferably less than or equal to 2.5 W/cm².

10. Appliance according to one of claims 1 to 9, **characterised in that** the catalyser is formed by a housing (15) comprising a catalytic cell (16) and heating elements (11), the said housing (15) being provided with means of admitting the cooking flux to be treated, the heating elements (11) being interposed between the orifices (17) and the catalytic cell (16) and disposed substantially in line with the said orifices (17).

11. Appliance according to claim 10, **characterised in that** the heating elements (11) are formed by an electrical element in a coil.

12. Appliance according to claim 11, **characterised in that** the coil element (11) extends substantially over the entire surface of the catalytic cell (16).

13. Appliance according to one of claims 10 to 12, **characterised in that** the housing (15) is mounted in the lid (8) of the appliance.

14. Appliance according to one of claims 1 to 13, **characterised in that** the heating elements (11) are connected to an electrical circuit comprising a switch (20), such as a micro-contact, associated with the position of the lid (8) so that the switch (20) cuts off the electrical supply to the heating elements (11) as soon as the lid (8) is opened or removed.

15. Appliance according to one of claims 1 to 14, **characterised in that** it comprises a safety thermostat (25) connected to the electrical supply circuit for the heating elements (11), the said thermostat being disposed in the vicinity of the catalyst in order to detect the ambient temperature and cut off the electrical supply to the heating elements (11) in the event of the said temperature being exceeded.

16. Appliance according to one of claims 1 to 14, **characterised in that** it consists of a deep fryer.

## Patentansprüche

1. Gerät zum Kochen von Nahrungsmitteln unter abgeschlossener Atmosphäre mit einem Topf (6) und einem Deckel (8), internen oder externen Mitteln zum Heizen der Vorrichtung, um den Kochvorgang durchzuführen, und einem Katalysator (10), um die Behandlung der Gerüche des Kochdunstes vor dem Entweichen des Kochdunstes nach außen zu gewährleisten, **dadurch gekennzeichnet, dass**
- der Katalysator (10) mindestens ein Heizelement (11) umfasst,
- die Vorrichtung Mittel zur Regulierung der Temperatur (12) der Heizelemente (11) umfasst, wobei die Mittel (12) so konzipiert sind, dass sie die Temperatur der Kochzone erfassen.

2. Gerät nach Anspruch 1, **dadurch gekennzeichnet, dass** die Regulierungsmittel (12) einen Temperaturfühler (12A) aufweisen, der so angebracht ist, dass er die Temperatur des Kochtopfes (6) als Abbild der Kochtemperatur erfasst.

3. Gerät nach Anspruch 2 **dadurch gekennzeichnet, dass** der Temperaturfühler (12A) gegen die Außenwand des Topfes (6) oder auf der Außenwand des Topfes (6) angebracht ist.

4. Gerät nach einem der Ansprüche 1 bis 3, **dadurch gekennzeichnet, dass** es ein System für die Wärmeregulierung der Heizmittel umfasst,

5. Gerät nach Anspruch 4 **dadurch gekennzeichnet, dass** das System für die Wärmeregulierung der Heizmittel mit Mitteln der Wärmeregulierung (12) für die Temperatur des Katalysators (10) gekoppelt ist, wobei das System einen gemeinsamen Temperaturfühler für die Wärmeregulienlngsmittel umfasst.

6. Gerät nach einem der Ansprüche 1 bis 4, **dadurch gekennzeichnet, dass** das System für die Wärmeregulierung der Heizmittel von den Wärmeregulierungsmitteln (12) der Katalysatortemperatur getrennt sind, wobei das System und die Mittel jeweils einen verschiedenen Temperaturfühler aufweisen.

7. Gerät nach einem der Ansprüche 2 bis 6, **dadurch gekennzeichnet, dass** der Temperaturfühler des Topfes ein Thermostat ist.

8. Gerät nach Anspruch 7 **dadurch gekennzeichnet, dass** der Thermostat gegen den Topfboden oder auf dem Topfboden oder gegen die Seitenwand oder auf der Seitenwand des Topfes angeordnet ist

9. Kochgerät nach einem der Ansprüche 1 bis 8, **dadurch gekennzeichnet, dass** die Heizelemente des Katalysators eine maximale Wärmebelastung von höchstens 3 W/cm² und vorzugsweise kleiner oder gleich 2,5 W/cm² aufweisen.

10. Gerät nach einem der Ansprüche 1 bis 9, **dadurch gekennzeichnet, dass** der Katalysator von einem Gehäuse (15) mit einer katalytischen Zelle (16) und Heizelementen (11) gebildet wird, wobei das Gehäuse (15) mit Zutrittsöffnungen für den zu behandelnden Kochdunst ausgestattet ist, die Heizelemente (11) zwischen den Öffnungen (17) und der katalytischen Zelle (16) liegen und ungefähr bei den Öffnungen (17) angeordnet sind.

11. Gerät nach Anspruch 10 **dadurch gekennzeichnet, dass** die Heizelemente (11) von einem schlangenförmigen elektrischen Widerstand gebildet werden.

12. Gerät nach Anspruch 11 **dadurch gekennzeichnet, dass** der schlangenförmige Widerstand (11) sich ungefähr über die ganze Oberfläche der katalytischen Zelle (16) erstreckt.

13. Gerät nach einem der Ansprüche 10 bis 12, **dadurch gekennzeichnet, dass** das Gehäuse (15) am Deckel (8) des Gerätes angebracht ist.

14. Gerät nach einem der Ansprüche 1 bis 13, **dadurch gekennzeichnet, dass** die Heizelemente (11) mit einem elektrischen Stromkreis verbunden sind, der einen Schalter (20), wie z.B. einen Mikrokontakt, aufweist, welcher mit der Position des Deckels (8) so gekoppelt ist, dass der Schalter (20) die Stromzufuhr zu den Heizelementen (11) unterbricht, sobald der Deckel geöffnet oder weggenommen wird.

15. Gerät nach einem der Ansprüche 1 bis 14, **dadurch gekennzeichnet, dass** es einen Sieherheitsthermostat (25) umfasst, der mit dem elektrischen Stromkreis für die Heizelemente (11) verbunden ist, wobei der Thermostat neben dem Katalysator angeordnet ist, um die Umgebungstemperatur zu ermitteln und für den Fall, dass die Einstelltemperatur überschritten wird, die Stromzufuhr zu den Heizelementen (11) unterbricht.

16. Gerät nach einem der Ansprüche 1 bis 14, **dadurch gekennzeichnet, dass** es eine Friteuse ist.
